Europäisches Patentamt

European Patent Office

Office européen des brevets

(19)

(11) Numéro de publication: **0 242 260**
**B1**

(12) # FASCICULE DE BREVET EUROPEEN

(45) Date de publication du fascicule du brevet:
29.03.89

(51) Int. Cl.⁴: **C10G 59/02**

(21) Numéro de dépôt: **87400721.4**

(22) Date de dépôt: **02.04.87**

(54) **Procédé de réformage catalytique.**

(30) Priorité: **16.04.86 FR 8605567**
**03.03.87 FR 8702970**

(43) Date de publication de la demande:
**21.10.87 Bulletin 87/43**

(45) Mention de la délivrance du brevet:
**29.03.89 Bulletin 89/13**

(84) Etats contractants désignés:
**BE DE ES FR GB GR IT NL**

(56) Documents cités:
**EP-A- 0 083 875**
**BE-A- 747 756**
**US-A- 3 658 691**
**US-A- 3 676 328**

(73) Titulaire: **INSTITUT FRANCAIS DU PETROLE, 4, Avenue de Bois-Préau, F-92502 Ruell-Malmaison(FR)**

(72) Inventeur: **Franck, Jean-Pierre, 24, avenue Ivan Tourgueneff, F-78300 Bougival(FR)**
Inventeur: **Bournonville, Jean-Paul, 43, rue des Groues Vauréal, F-95000 Cergy Pontoise(FR)**
Inventeur: **Berthelin, Maurice, La Cerisaie, 1, avenue Dauphiné Serezin du Rhône, F-69360 Saint-Symphorien d'Ozon(FR)**

**Description**

Le réformage catalytique ou hydroréformage est un procédé bien connu de l'industrie du raffinage dont l'objectif est généralement l'amélioration de l'indice d'octane des essences lourdes ou des essences de distillation directe du pétrole et/ou la production d'hydrocarbures aromatiques. Cette opération doit être réalisée industriellement avec le rendement le plus élevé possible en produits recherchés: base pour carburants ou composés aromatiques pour la pétrochimie. Habituellement le rendement est mesuré par la quantité produite d'essence contenant des hydrocarbures à cinq atomes de carbone et plus par rapport à la charge injectée, communément appelée coupe essence $C_5^+$. Actuellement, un autre facteur directement lié au précédent, prend une importance croissante: la production d'hydrogène. L'objectif qu'il faut s'efforcer d'atteindre est l'obtention de rendements en coupe essence $C_5^+$ et en hydrogène les plus élevés possibles.

Dans un proche avenir, l'application des normes antipollution va conduire à une diminution de la concentration en plomb dans les essences, pour aboutir à terme à la suppression des additifs organoplombiques dans les carburants automobiles pour moteurs à allumage commandé. Cette réglementation impose aux raffineurs une augmentation de la sévérité des conditions opératoires de fonctionnement des unités de réformage afin de satisfaire aux critères de qualité requis pour un fonctionnement satisfaisant des moteurs automobiles. De plus, la restructuration du raffinage en faveur d'une part de plus en plus importante prise par les unités de conversion et d'hydrotraitement va accroître sensiblement les besoins en hydrogène dans les raffineries. La satisfaction de ces besoins supplémentaires en hydrogène incombe en grande partie au réformage catalytique ou hydroréformage, dont les conditions de fonctionnement doivent être ajustées pour répondre à cette demande.

L'accroissement de la sévérité des conditions opératoires de fonctionnement des installations industrielles, par exemple diminution de la pression opératoire et si nécessaire, augmentation de la température, est thermodynamiquement favorable aux réactions conduisant aux produits recherchés (aromatiques et hydrogène) mais pénalise fortement la stabilité des catalyseurs. En effet dans des conditions de sévérité accrue, la vitesse de dépôt de carbone, sous forme de coke, sur le catalyseur augmente, ce qui a pour conséquence une décroissance plus rapide de l'activité du catalyseur.

Cette évolution entraîne une élévation de la fréquence de régénération des catalyseurs et par conséquent une diminution du temps de fonctionnement et donc de la capacité totale de traitement des installations industrielles. Il est clair que toute amélioration de la stabilité des catalyseurs, qui se traduira par une diminution de la fréquence de régénération ou, autrement dit, par un allongement de la durée de fonctionnement entre deux régénérations successives, représente un progrès significatif pour tendre vers l'utilisation la plus rationnelle possible des installations industrielles.

Les catalyseurs utilisés en réformage catalytique sont généralement à base d'alumine renfermant un métal noble du groupe VIII de la classification périodique des éléments, généralement le platine pour les catalyseurs de la première génération tels que par exemple ceux décrits par V. HAENSEL dans OIL AND GAS JOURNAL, vol. 48 n° 47 pages 82 et suivantes, 1950. Une deuxième génération de catalyseurs est apparue dans laquelle un élément dit promoteur est ajouté au métal du groupe VIII. Parmi les promoteurs les plus fréquemment utilisés, on citera à titre d'exemples le rhénium US-A 3 415 737, l'étain US-A 3 700 588, l'indium et le thallium US-A 2 814 599. L'ajout de ces différents promoteurs a permis des gains en stabilité et/ou en sélectivité importants par rapport aux catalyseurs dits de première génération. L'ajout de deux éléments promoteurs a également été décrit comme apportant un progrès significatif sur le plan de la stabilité et/ou de la sélectivité. Un catalyseur comprenant sur un support d'alumine, du platine, du rhénium et de l'étain est par exemple décrit dans le brevet US-A 3 702 294.

Ces divers catalyseurs ont été testés et/ou utilisés sur de longues périodes, parfois égales ou même supérieures à une année par exemple. Chaque formule catalytique présente à la fois des avantages et des inconvénients:

— le catalyseur platine-rhénium possède une excellente stabilité mais ne permet pas d'observer une sélectivité maximale dans la production d'essences de bonne qualité,

— les catalyseurs platine-étain, platine-indium ou platine-thallium permettent d'obtenir une excellente sélectivité mais ont une stabilité nettement moins bonne que le catalyseur platine-rhénium,

— l'utilisation de catalyseurs renfermant trois métaux (par exemple, platine, rhénium et étain) ne permet d'obtenir ni une stabilité égale à celle du platine-rhénium, ni une sélectivité équivalente à celle du platine-étain, du platine-indium ou du platine-thallium.

Pour améliorer la stabilité des catalyseurs renfermant du platine et du rhénium déposés sur alumine, l'augmentation du rapport, atomique ou pondéral, de la quantité de rhénium sur la quantité de platine, contenues dans le catalyseur a été proposée et décrite dans le brevet belge BE-A 875 386.

Ainsi dans le brevet BE-A 875 386, la composition catalytique décrite fait mention d'un rapport pondéral rhénium sur platine compris entre 2 et 5 et préférentiellement entre 2,25 et 4. L'utilisation de catalyseurs enrichis en rhénium se traduit par une augmentation relative de la durée de cycle pouvant atteindre 65% par rapport à l'utilisation de catalyseurs contenant sensiblement la même quantité de métaux: platine plus rhénium. Néanmoins l'utilisation de catalyseurs enrichis en rhénium conduit généralement à une perte de rendement en essence $C_5^+$ supérieure à 1% poids. De plus l'effet positif de l'enrichissement en rhénium sur la stabilité n'est observé que si la teneur en soufre du naphta mis en œuvre est inférieure à 0,5 ppm en poids.

Pour remédier à cette baisse de sélectivité due à l'utilisation de catalyseurs enrichis en rhénium dans tous les réacteurs, il a été préconisé d'utiliser un catalyseur platine-rhénium, dont le rapport pondéral rhénium sur platine est inférieur ou égal à environ 1, dans le ou les premiers réacteurs et un catalyseur platine-rhénium, dont le rapport pondéral rhénium sur platine est supérieur ou égal à environ 2, dans le ou les derniers réacteurs. De tels agencements sont par exemple décrits dans les documents suivants: FR-A 2 467 236, US-A 4 427 533 et US-A 4 436 612. Dans ce cas on observe une stabilité équivalente ou supérieure et une sélectivité en coupe essence C$_5^+$ légèrement améliorée par rapport au catalyseur contenant du platine et du rhénium, dans un rapport pondéral inférieur ou égal à environ 1 employé dans tous les réacteurs.

Par ailleurs dans la demande de brevet européen EP-A 153 891, l'utilisation dans le premier réacteur d'un catalyseur présentant une meilleure stabilité que celle des catalyseurs employés dans les autres réacteurs, permet d'améliorer sensiblement la stabilité et la sélectivité de l'ensemble des lits catalytiques contenus dans les différents réacteurs de l'unité.

L'objet de la présente invention est d'obtenir des essences de qualité requise pendant de longues périodes, avec une sélectivité très satisfaisante. Un autre objet de l'invention est d'obtenir des quantités relativement importantes d'hydrogène.

De manière surprenante, on a découvert que des rendements accrus en coupe essence C$_5^+$ et en hydrogène peuvent être obtenus lorsque l'on fait circuler une charge d'hydrocarbures dans des conditions de réformage, en présence d'hydrogène, successivement à travers au moins deux lits fixes de catalyseur, chaque lit contenant un catalyseur renfermant un support, du platine, du rhénium et éventuellement au moins un halogène, le catalyseur du premier ou des premiers lits traversé(s) par la charge étant un catalyseur dit de type A dont le rapport pondéral rhénium sur platine (Re/Pt) exprimé en élément métallique est supérieur au rapport pondéral Re/Pt du catalyseur dit de type B continue dans le ou les derniers lits traversé(s) par la charge, ledit catalyseur de type B contenant au moins environ 0,08% en poids de rhénium par rapport au support. Les catalyseurs de type A et de type B peuvent être, pour ce qui est de leurs constituants identiques ou différents.

Dans une forme avantageuse de réalisation de l'invention les deux types de catalyseurs contiennent le même support et généralement le même halogène, la seule différence étant le rapport pondéral Re/Pt.

Dans une autre forme avantageuse de réalisation au moins un type de catalyseur (type A et/ou type B) renferme au moins un métal M choisi dans le groupe formé par l'étain, le germanium, le plomb, l'indium, le thallium et le titane. Parmi les métaux M on préfère employer l'indium et/ou l'étain.

La quantité de métal M contenue dans le catalyseur est habituellement d'environ 0,01% à environ 3% et de préférence d'environ 0,01 à environ 1% en poids de métal par rapport au support.

Une quantité relativement faible, par exemple d'environ 0,01% à environ 0,1% en poids et même souvent d'environ 0,01% à environ 0,06% en poids est en général suffisante pour observer un effet important sur les résultats.

Le point essentiel de l'invention étant que le catalyseur contenu dans le ou les premiers lits traversés par la charge à un rapport pondéral Re/Pt supérieur au rapport pondéral Re/Pt du catalyseur contenu dans le ou les derniers lits traversés par la charge.

Dans une forme avantageuse de réalisation de l'invention le catalyseur de type A est un catalyseur ayant un rapport pondéral Re/Pt de 1:1 à 5:1 et le catalyseur de type B est un catalyseur ayant un rapport pondéral Re/Pt de 0,1:1 à 3:1 et de préférence le catalyseur de type A a un rapport pondéral Re/Pt de 1,6:1 à 4:1 et le catalyseur de type B a un rapport pondéral Re/Pt de 0,5:1 à 1,5:1 et d'une manière la plus préférée le rapport pondéral Re/Pt du catalyseur de type A est de 2:1 à 3:1 et le rapport pondéral Re/Pt du catalyseur de type B est de 0,8:1 à 1,1:1.

Les supports des catalyseurs (identiques ou différents) utilisés dans la présente invention sont généralement choisis parmi les oxydes des métaux des groupes II, III et/ou IV de la classification périodique des éléments, tel que par exemple, les oxydes de magnésium, d'aluminium, de titane, de zirconium, de thorium ou de silicium, pris seuls ou en mélange entre eux ou avec des oxydes d'autres éléments de la classification périodique, tels que par exemple le bore. On peut utiliser aussi du charbon. On peut également utiliser des zéolithes ou tamis moléculaires de type X ou Y, ou de type mordénite ou faujasite ou de type ZSM-5, ZSM-4, ZSM-8 etc... ainsi que des mélanges d'oxydes de métaux des groupes II, III et/ou IV avec du matériel zéolithique.

D'une manière préférée, on emploie un support formé principalement d'alumine, c'est-à-dire dont l'alumine représente au moins 50% en poids par rapport au poids total du support et de préférence au moins 80% en poids et d'une manière la plus préférée on emploie de l'alumine seule.

D'une façon avantageuse, les catalyseurs employés dans la présente invention renferment en poids par rapport au support, environ 0,05 à 3% de platine et environ 0,08 à 3% de rhénium. D'une manière préférée le catalyseur de type A renferme environ 0,05 à 0,6% de platine et environ 0,10 à 3% de rhénium en poids par rapport au support et le catalyseur de type B renferme environ 0,05 à 0,6% de platine et environ 0,10 à 1% de rhénium. D'une manière la plus préférée, le catalyseur de type A renferme en poids par rapport au support environ 0,1 à 0,5% de platine et environ 0,1 à 2% et plus particulièrement environ 0,2 à 1,5% de rhénium et le catalyseur de type B renferme environ 0,1 à 0,5% de platine et environ 0,10 à 0,9% et plus particulièrement environ 0,15 à 0,75% de rhénium.

Les proportions du rhénium et du platine sont obligatoirement choisies de manière à ce que le rapport pondéral Re/Pt du catalyseur contenu dans le ou les premiers lits catalytiques traversés par la charge soit supérieur au rapport pondéral Re/Pt du catalyseur contenu dans le ou les derniers lits catalytiques traversés par la charge.

Pour accroître le rendement du catalyseur dans les opérations de réformage, il est généralement avantageux d'ajouter aux catalyseurs au moins un halogène.

D'une manière préférée, on emploie du chlore et/ou du fluor. L'introduction d'halogène dans le catalyseur peut s'effectuer par tout procédé à tout moment de sa préparation ou de sa régénération ou en cours de réaction. L'halogène peut être introduit également à l'aide d'un composé halogéné tel qu'un acide halogéné par exemple ou encore un composé organique halogéné par exemple le tétrachlorure de carbone. L'emploi d'halogène est particulièrement avantageux dans le cas ou le support est de l'alumine.

La quantité d'halogène ou de composé halogéné employée sera de préférence telle que les catalyseurs renferment de 0,1 à 15% en poids d'au moins un halogène par rapport au support et de préférence de 0,2 à 5% en poids.

La proportion pondérale du catalyseur de type B employé dans le ou les derniers lits catalytiques traversés par la charge est avantageusement de 60 à 92% du poids de la masse catalytique totale employée dans le procédé et de préférence de 80 à 90%.

Il est bien connu de l'Homme du métier que les réactions de réformage sont des réactions endothermiques. Ainsi on emploie habituellement une série de réacteurs adiabatiques contenant les lits de catalyseurs, en prévoyant de préférence un réchauffage entre chaque réacteur ou entre chaque lit catalytique traversé par la charge.

D'une manière préférée le procédé de l'invention consiste à faire circuler une charge d'hydrocarbures successivement à travers au moins trois lits fixes de catalyseur.

On décrit ci-après à titre d'exemples non limitatifs quelques agencements possibles, l'Homme du métier est à même d'imaginer toutes sortes d'agencements de lits catalytiques au moins en partie en série, l'essentiel selon l'invention étant que la charge traverse d'abord au moins un lit catalytique contenant un catalyseur dont le rapport pondéral Re/Pt soit plus élevé que le rapport pondéral Re/Pt du ou des derniers lits catalytiques traversés par la charge. L'emploi de deux ou de plusieurs lits catalytiques en parallèle entre dans le cadre de l'invention.

Un premier exemple d'agencement consiste à faire circuler la charge successivement à travers au moins trois lits fixes catalytiques distincts, le premier lit catalytique traversé par la charge renfermant un catalyseur de type A dont le rapport pondéral Re/Pt est supérieur aux rapports pondéraux Re/Pt respectifs des catalyseurs de type A et/ou B et B pour le dernier lit, contenus dans les autres lits catalytiques. Ainsi par exemple dans le cas de trois lits le catalyseur contenu dans le premier lit aura un rapport pondéral Re/Pt supérieur au rapport pondéral Re/Pt des catalyseurs contenus dans les deux lits suivants.

Un deuxième exemple d'agencement consiste à faire circuler la charge successivement à travers au moins trois lits fixes catalytiques distincts, le premier et le deuxième lits catalytiques traversés par la charge renfermant chacun un catalyseur de type A dont les rapports pondéraux respectifs Re/Pt sont supérieurs au rapport pondéral Re/Pt des catalyseurs de type B contenus dans le ou les derniers lits catalytiques traversés par la charge. Ainsi par exemple dans le cas de trois lits de catalyseurs, les catalyseurs contenus dans les deux premiers lits auront un rapport pondéral Re/Pt supérieur au rapport pondéral Re/Pt du catalyseur contenu dans le dernier lit.

Un troisième exemple d'agencement consiste à faire circuler la charge successivement à travers au moins trois lits fixes catalytiques distincts, contenant chacun un catalyseur dont les rapports pondéraux Re/Pt sont globalement décroissants depuis le premier lit contenant un catalyseur de type A jusqu'au dernier lit contenant un catalyseur de type B.

Dans les exemples d'agencements 1 à 3 décrits ci-avant, on peut utiliser les divers catalyseurs envisagés ci-avant. Ainsi on peut par exemple employer un catalyseur de type A et un catalyseur de type B ne comprenant pas de métal M; on peut également par exemple employer un catalyseur de type A et un catalyseur de type B comprenant chacun au moins un métal M, le ou les métaux M introduits dans chaque type de catalyseur pouvant être identiques ou différents; on peut également par exemple, employer un catalyseur de type A comprenant au moins un métal M et un catalyseur de type B ne comprenant pas de métal M; on peut enfin par exemple, employer un catalyseur de type A ne comprenant pas de métal M et un catalyseur de type B comprenant au moins un métal M.

De manière plus précise dans le cas où l'on utilise trois lits catalytiques disposés en série dans un même réacteur ou dans plusieurs réacteurs, et si l'on désigne par $r_a$ le rapport pondéral Re/Pt du catalyseur contenu dans le premier lit catalytique traversé par la charge, par $r_b$ le rapport pondéral Re/Pt du catalyseur contenu dans le deuxième lit catalytique traversé par la charge et par $r_c$ le rapport pondéral Re/Pt du catalyseur contenu dans le troisième et dernier lit catalytique traversé par la charge, on aura selon l'invention, dans tous les cas <u>impérativement</u> la relation de grandeur $r_a > r_c$ ou $r_a/r_c > 1$; les diverses relations de grandeur suivantes sont possibles $r_a \geqq r_b$, $r_a < r_b$, $r_b \geqq r_c$ et $r_b < r_c$. Parmi ces divers cas les relations de grandeurs suivantes sont celles que l'on préfère employer:

* $r_a > r_b \geq r_c$ avec de façon préférée $r_a$ variant de 1,6:1 à 4:1 et de manière la plus préférée de 2:1 à 3:1 et $r_b$ et $r_c$ variant de préférence de 0,5:1 à 1,5:1 et de manière la plus préférée de 0,8:1 à 1,1:1.

* $r_a>r_b>r_c$ les valeurs préférées étant celles données ci-dessus.

*$r_a \geq r_b$ et $r_b \geq r_c$ avec toujours $r_a>r_c$, $R_a$ variant de préférence de 1,6:1 à 4:1, et de manière la plus préférée de 2:1 à 3:1 $r_b$ variant de préférence de 1:1 à 2:1 et $r_c$ variant de préférence de 0,8:1 à 1,1:1.

Dans les agencements décrits ci-avant, comprenant de préférence au moins trois lits catalytiques, le catalyseur de type B est de préférence réparti en au moins deux lits catalytiques, le premier de ces lits contenant alors habituellement d'environ 15 à environ 50% en poids et de préférence d'environ 20 à environ 45% en poids de la quantité totale du catalyseur de type B utilisé dans le procédé.

Les divers lits catalytiques peuvent être contenus dans un réacteur unique, comportant de préférence au moins trois lits distincts superposés de catalyseur, dans le cas d'un courant descendant le lit supérieur contenant un catalyseur de type A et dans le cas d'un courant ascendant le lit inférieur contenant un catalyseur de type A.

Les divers lits catalytiques peuvent être également contenus dans au moins deux réacteurs de préférence placés en série par exemple côte à côte ou superposés, le premier réacteur traversé par la charge renfermant un catalyseur de type A et les autres réacteurs renfermant un ou plusieurs lits de catalyseur de type A et/ou B et au moins le dernier lit traversé par la charge contenu dans le dernier réacteur renfermant un catalyseur de type B.

On commence les opérations de réformage en réglant, dans les conditions opérationnelles, les débits d'hydrogène et d'alimentation ainsi que la température et la pression. Les conditions générales du réformage sont bien connues de l'Homme de métier, généralement le réformage catalytique est effectué à une température de 400 à 600°C, sous une pression absolue de 0,1 à 3,5 MPa, avec une vitesse horaire (VVH) de 0,1 à 10 volumes de charge par volume de catalyseur et par heure, et un rapport molaire hydrogène/hydrocarbures ($H_2$/HC) de 1:1 à 20:1. Les conditions préférées sont: température 500 à 580°C, pression 0,5 à 1,8 MPa, VVH 1 à 10 et $H_2$/HC 3:1 à 10:1.

Dans les réactions de reforming, le manque de sélectivité se traduit généralement par un mauvais rendement dans la déshydrogénation des naphtènes en hydrocarbures aromatiques, par un craquage parasite des paraffines avec formation secondaire d'hydrocarbures oléfiniques qui seront à l'origine de la formation du coke. Le présent procédé permet de déshydrogéner au maximum les hydrocarbures naphténiques en hydrocarbures aromatiques, de minimiser le craquage des paraffines et ainsi de ne pas obtenir des hydrocarbures légers mais au contraire de les transformer également au maximum en hydrocarbures aromatiques. Ainsi conformément à l'invention dans la première zone de réaction où est utilisé un catalyseur de stabilité excellente, on procède essentiellement à la déshydrogénation d'hydrocarbures, notamment des naphtènes en hydrocarbures aromatiques et dans les autres zones de réaction, du fait de la sélectivité permise par le choix approprié d'un catalyseur, on procède notamment à des réactions de cyclisation de paraffines sans craquer ces dernières.

Les exemples suivants, non limitatifs, illustrent l'invention.

## EXEMPLE 1:

On se propose de traiter une charge ayant les caractéristiques suivantes:
distillation ASTM: 90–160°C
densité à 15°C: 0,741
composition:
hydrocarbures paraffiniques: 60% en volume
hydrocarbures naphténiques: 29% en volume
hydrocarbures aromatiques: 11% en volume.

On traite la charge par de l'hydrogène dans des conditions opératoires équivalant, pour les catalyseurs utilisés, à des tests de vieillissement accéléré, ces conditions étant les suivantes:
Pression: 0,8 MPa (8 bars)
Température: 510°C
$H_2$/HC(molaire): 3
Débit horaire de charge liquide: 3 fois le volume total de catalyseur

La charge circule successivement à travers trois réacteurs en série à lits fixes de catalyseur. Le catalyseur A renferme en poids 0,25% de platine et 0,5% de rhénium par rapport au support du catalyseur qui est une alumine ayant une surface spécifique de 220 m²/g et un volume poreux de 0,58 cm³/g. Le catalyseur A renferme en outre 1,15% de chlore (la surface spécifique et le volume poreux du catalyseur A sont respectivement égaux à 215 m²/g et 0,56 cm³/g). Le rapport pondéral Re/Pt du catalyseur A est de 2.

Le catalyseur B renferme le même support que le catalyseur A et contient en poids par rapport à ce support:
– 0,25% de platine,
– 0,25% de rhénium,
– 1,15% de chlore.

Le rapport pondéral Re/Pt du catalyseur B est de 1.

On donne dans le tableau 1 suivant, les résultats obtenus après 100 heures de fonctionnement dans les conditions précitées pour divers types d'agencement des lits catalytiques:
– agencement 1: catalyseur A dans tous les réacteurs,
– agencement 2: catalyseur B dans tous les réacteurs,
– agencement 3: catalyseur A dans le premier réacteur (15% en poids de la quantité totale des catalyseurs utilisés), catalyseur B dans les deuxième et troisième réacteurs (85% en poids de la quantité totale des catalyseurs utilisés: 30% en poids dans le 2ème réacteur et 55% en poids dans le 3ème réacteur),
– agencement 4: catalyseur A dans les premier et deuxième réacteurs (40% en poids de la quantité totale des catalyseurs utilisés), catalyseur B dans le troisième réacteur (60% en poids de la quantité totale des catalyseurs utilisés),
– agencement 5: catalyseur B dans le premier réacteur (15% en poids de la quantité totale de catalyseurs), catalyseur A dans les deuxième et troisième réacteurs (85% en poids de la qualité totale de catalyseurs),
– agencement 6: catalyseur B dans les premier et deuxième réacteurs (60% en poids de la quantité totale de catalyseurs), catalyseur A dans le troisième réacteur (40% en poids de la quantité totale de catalyseurs).
– agencement 7: catalyseur B dans le premier et deuxième réacteur (85% en poids de la quantité totale de catalyseurs), catalyseur A dans le troisième réacteur (15% en poids de la quantité totale de catalyseurs).

L'examen des résultats du tableau 1 montre que les agencements 3 et 4 selon l'invention conduisent aux meilleurs rendements en coupe essence $C_5^+$ et en hydrogène tout en maintenant un niveau élevé d'activité.

## Tableau 1

| Agencement | 1 | 2 | 3 | 4 | 5 | 6 | 7 |
|---|---|---|---|---|---|---|---|
| $H_2$ | 2,70 | 2,78 | 2,98 | 2,80 | 2,74 | 2,76 | 2,76 |
| $CH_4 + C_2H_6$ | 3,06 | 2,43 | 2,09 | 2,61 | 2,86 | 2,89 | 2,60 |
| $C_3H_8 + C_4H_{10}$ | 6,24 | 5,79 | 4,93 | 5,29 | 5,85 | 5,90 | 5,85 |
| $C_5+$ | 88,00 | 89,00 | 90,00 | 89,30 | 88,55 | 88,45 | 88,79 |
| Caractéristique de la frction $C_5+$ | | | | | | | |
| $d_4^{15}$ | 0,799 | 0,790 | 0,800 | 0,793 | 0,798 | 0,797 | 0,791 |
| NOR | 97,4 | 96,1 | 97,5 | 96,8 | 97,3 | 97 | 96,4 |
| % poids oléfines (*) | 0,4 | 0,8 | 0,3 | 0,4 | 0,4 | 0,6 | 0,7 |
| % poids naphtènes (**) | 3,9 | 5,5 | 4,0 | 4,0 | 4,8 | 5,0 | 5,2 |
| % poids aromatiques | 67,6 | 65,5 | 67,8 | 66,6 | 67,5 | 67,2 | 66,5 |

(*): précurseur de coke
(**): en relation avec l'activité déshydrogénante

## EXEMPLE 2:

On procède dans les mêmes conditions que dans l'exemple 1 (agencement 3) mais en remplaçant le catalyseur A par le catalyseur C qui renferme le même support que le catalyseur A et contient en poids par rapport au support:
– 0,25% de platine,
– 1,00% de rhénium,
– 1,15% de chlore.

Le rapport pondéral Re/Pt du catalyseur C est de 4. Après 100 heures de fonctionnement les performances sont données dans le tableau 2 qui reprend également les résultats des agencements 1, 3 et 6 de l'exemple 1. L'agencement 8 catalyseur C dans le premier réacteur (15% en poids de la quantité totale des catalyseurs utilisés) catalyseur B dans le deuxième et le troisième réacteur (85% en poids de la quantité totale des catalyseurs utilisés).

Tableau 2

| Agencement | Agencement 1 | Agencement 3 | Agencement 6 | Agencement 8 |
|---|---|---|---|---|
| $H_2$ | 2,70 | 2,98 | 2,76 | 2,80 |
| $CH_4 + C_2H_6$ | 3,06 | 2,09 | 2,89 | 2,60 |
| $C_3H_8 + C_4H_{10}$ | 6,24 | 4,93 | 5,90 | 5,35 |
| $C_5+$ | 88,00 | 90,00 | 88,45 | 89,25 |
| Caractéristiques de la fraction $C_5+$ | | | | |
| $d_4^{15}$ | 0,799 | 0,800 | 0,797 | 0,795 |
| NOR | 97,4 | 97,5 | 97,0 | 97,0 |
| % poids oléfines | 0,4 | 0,3 | 0,6 | 0,5 |
| % poids naphtènes | 3,9 | 4,0 | 5,0 | 4,1 |
| % poids aromatiques | 67,6 | 67,8 | 67,2 | 67,0 |

L'utilisation, dans le premier réacteur, d'un lit fixe de catalyseur platine-rhénium dont le rapport pondéral rhénium sur platine est égal à 4 conduit à des rendements en hydrogène et en coupe essence $C_5+$ légèrement inférieur à ceux obtenus avec un agencement de catalyseurs, dans les différents réacteurs dont le premier catalyseur à un rapport pondéral Re/Pt dans la gamme préférée selon l'invention.

On constate également que l'agencement 8 conforme à l'invention permet d'obtenir un meilleur rendement en coupe essence $C_5+$ et en hydrogène que les agencements 1 et 6 non conformes à l'invention, tout en maintenant un niveau élevé d'activité.

EXEMPLE 3:

On procède dans les mêmes conditions que dans l'exemple 1 (agencement 3) mais en remplaçant le catalyseur A par le catalyseur D qui renferme le même support que le catalyseur A et contient en poids par rapport au support:
– 0,25% de platine,
– 0,8% de rhénium,
– 1,15% de chlore.
Le rapport pondéral rhénium/platine du catalyseur D est de 3,2.
Après 100 heures de fonctionnement, les performances sont données dans le tableau 3 dans lequel on reprend également les performances de l'agencement 3 de l'exemple 1. L'agencement 9: catalyseur D dans le premier réacteur (15% en poids de la quantité totale des catalyseurs utilisés) catalyseur B dans le deuxième et le troisième réacteur (85% en poids de la quantité totale des catalyseurs utilisés).

Tableau 3

| Agencement | Agencement 3 | Agencement 9 |
|---|---|---|
| $H_2$ | 2,98 | 2,85 |
| $CH_4 + C_2H_6$ | 2,09 | 2,15 |
| $C_3H_8 + C_4H_{10}$ | 4,93 | 5,30 |
| $C_5^+$ | 90,00 | 89,70 |
| Caractéristiques de la fraction $C_5^+$ | | |
| $d_4^{15}$ | 0,800 | 0,798 |
| NOR | 97,5 | 97,3 |
| % poids oléfines | 0,3 | 0,4 |
| % poids naphtènes | 4,0 | 4,1 |
| % poids aromatiques | 67,8 | 67,5 |

L'utilisation, dans le premier réacteur, d'un lit fixe de catalyseur platine-rhénium, dont le rapport pondéral rhénium sur platine est de 3,2 donc voisin de la valeur supérieure de la gamme des valeurs préférées pour ce rapport permet d'obtenir un bon rendement en coupe essence $C_5+$ et en hydrogène. Le rendement obtenu est cependant légèrement inférieur à celui obtenu avec l'agencement 3 dans lequel le premier lit de catalyseur contient un catalyseur A dont le rapport pondéral Re/Pt est dans la gamme la plus préférée.

EXEMPLE 4:

On procède dans les mêmes conditions que dans l'exemple 1 en utilisant dans le premier réacteur un catalyseur F renfermant le même support que le catalyseur A et contenant en poids par rapport à ce support:
0,25% de platine,
0,52% de rhénium,
1,15% de chlore.
Le rapport pondéral Re/Pt du catalyseur F est de 2,08.
Dans le deuxième réacteur on utilise un catalyseur G ayant le même support que le catalyseur A et contenant en poids par rapport à ce support:
0,25% de platine,
0,37% de rhénium,
1,15% de chlore.
Le rapport pondéral Re/Pt du catalyseur G est de 1,48.
Dans le troisième réacteur on utilise le catalyseur B décrit dans l'exemple 1.
L'agencement 10 est utilisé. La quantité des catalyseurs F, G et B est respectivement de 15%, 40% et 45% en poids par rapport à la quantité totale des catalyseurs utilisés et la charge traverse successivement le catalyseur F puis le catalyseur G et enfin le catalyseur B. Les résultats sont donnés dans le tableau 4 ci-après.

EXEMPLE 5: (comparatif)

On procède dans les mêmes conditions que dans l'exemple 1 agencement 6 en remplaçant le catalyseur A par le catalyseur H qui renferme le même support que le catalyseur A et qui contient par rapport au support:
0,25% de platine
1,15% de chlore.
Le catalyseur H ne contient pas de rhénium, le rapport pondéral Re/Pt de ce catalyseur est nul. L'agencement 11 comprend 60% en poids par rapport à la quantité totale de catalyseur du catalyseur B réparti dans le deux premiers réacteurs et 40% en poids du catalyseur H par rapport à la quantité totale de catalyseur dans le troisième réacteur. Les résultats sont donnés dans le tableau 4 ci-après.

EXEMPLE 6: (comparatif)

On procède dans les mêmes conditions que dans l'exemple 5 en utilisant dans le premier et le deuxième réacteur un catalyseur I renfermant le même support que le catalyseur H et contenant en poids par rapport au support:
0,25% poids de platine
0,48% poids de rhénium
1,15% poids de chlore
Le rapport pondéral Re/Pt du catalyseur I est de 1,92.
Dans le premier et le deuxième réacteur la quantité de catalyseur I représente 60% en poids par rapport à la quantité totale de catalyseur et la quantité de catalyseur H dans le troisième réacteur représente 40% en poids par rapport à la quantité totale de catalyseur: agencement 12.
La quantité en poids de rhénium et de platine dans l'ensemble des trois réacteurs est identique à celle utilisée dans l'agencement 3. Les résultats donnés dans le tableau 4 ci-après montrent que les agencements 3 et 4 selon l'invention permettent d'obtenir un meilleur rendement en coupe essence $C_5^+$ et en hydrogène que les agencements 11 et 12 non conformes à l'invention.

Tableau 4

| Agencement | 3 | 4 | 10 | 11 | 12 |
|---|---|---|---|---|---|
| $H_2$ | 2,98 | 2,80 | 2,96 | 2,60 | 2,65 |
| $CH_4 + C_2H_6$ | 2,09 | 2,61 | 2,11 | 3,00 | 3,20 |
| $C_3H_8 + C_4H_{10}$ | 4,93 | 5,29 | 5,03 | 7,40 | 7,60 |
| $C_5+$ | 90,00 | 89,30 | 89,90 | 87,00 | 86,55 |
| Caractéristiques de la fraction $C_5+$ | | | | | |
| $d_4^{15}$ | 0,800 | 0,793 | 0,799 | 0,782 | 0,786 |
| NOR | 97,5 | 96,8 | 97,4 | 95,0 | 95,4 |
| % poids oléfines | 0,3 | 0,4 | 0,4 | 2,2 | 2,0 |
| % poids naphtènes | 4,0 | 4,0 | 4,0 | 8,5 | 7,5 |
| % poids aromatiques | 67,8 | 66,6 | 67,7 | 62,5 | 64,5 |

EXEMPLE 7:

On procède dans les mêmes conditions que dans l'exemple 1 mais en utilisant un agencement 13 différent de l'agencement 3. Dans l'agencement 13 le catalyseur A est placé dans le premier et le deuxième réacteur et représente 50% en poids de la quantité totale des catalyseurs utilisés. Le catalyseur B (50% en poids de la quantité totale de catalyseur) est placé dans le troisième réacteur. Les résultats sont donnés dans le tableau 5 ci-après.

EXEMPLE 8:

On procède dans les mêmes conditions que dans l'exemple 1 – agencement 3 – en remplaçant le catalyseur B par le catalyseur K dans le deuxième et le troisième réacteur. Le catalyseur K renferme le même support que le catalyseur A et contient par rapport au support:
0,25% poids de platine
0,10% poids de rhénium
1,15% poids de chlore
Le rapport pondéral Re/Pt du catalyseur K est égal à 0,4. L'agencement 14 comprend 15% en poids, par rapport à la quantité totale de catalyseur, du catalyseur A dans le premier réacteur et 85% en poids par rapport à la quantité totale de catalyseur, du catalyseur K, réparti dans le deuxième et le troisième réacteur.
Les résultats sont donnés dans le tableau 5 ci-après.

EXEMPLE 9: (comparatif)

On procède dans les mêmes conditions que dans l'exemple 1 – agencement 3 – en remplaçant le catalyseur B par le catalyseur J dans le deuxième et le troisième réacteur. Le catalyseur J renferme le même support que le catalyseur A et contient par rapport au support:
0,25% poids de platine
0,05% poids de rhénium
1,15% poids de chlore
Le rapport pondéral Re/Pt du catalyseur J est égal 0,2. L'agencement 15 comprend 15% en poids, par rapport à la quantité totale de catalyseur, du catalyseur A, dans le premier réacteur et 85% en poids, par rapport à la quantité totale de catalyseur, du catalyseur J, réparti dans le deuxième et le troisième réacteur. Les résultats sont donnés dans le tableau 5 ci-après.

Tableau 5

| Agencement | 3 | 13 | 14 | 15 |
|---|---|---|---|---|
| $H_2$ | 2,98 | 2,79 | 2,79 | 2,65 |
| $CH_4 + C_2H_6$ | 2,09 | 2,68 | 2,35 | 2,95 |
| $C_3H_8 + C_4H_{10}$ | 4,93 | 5,40 | 5,56 | 7,20 |
| $C_{5+}$ | 90,00 | 89,13 | 89,30 | 87,20 |
| Caractéristiques de la fraction $C_{5+}$ | | | . | |
| $d_4^{15}$ | 0,800 | 0,798 | 0,791 | 0,784 |
| NOR | 97,5 | 97,3 | 96,3 | 95,2 |
| % poids oléfines | 0,3 | 0,4 | 0,6 | 1,9 |
| % poids naphtènes | 4,0 | 4,5 | 5,0 | 8,1 |
| % poids aromatiques | 67,8 | 67,4 | 66,0 | 63,5 |

EXEMPLE 10:

On procède dans les mêmes conditions que dans l'exemple 1 mais en utilisant dans les agencements 16 à 19 au moins un catalyseur N, P ou Q dans au moins un des réacteurs.

Le tableau 6 ci-après, regroupe les caractéristiques des agencements: type de catalyseur et pourcentage en poids du catalyseur par rapport à la quantité totale des catalyseurs utilisés dans l'ensemble des trois réacteurs.

Le catalyseur N renferme le même support que le catalyseur A et contient en poids par rapport à ce support:

0,25% poids de platine
0,25% poids de rhénium
0,025% poids d'indium
1,15% poids de chlore

Le rapport pondéral Re/Pt du catalyseur N est de 1.

Le catalyseur P renferme le même support que le catalyseur A et contient en poids par rapport à ce support:

0,25% poids de platine
0,25% poids de rhénium
0,025% poids d'étain
1,15% poids de chlore

Le rapport pondéral Re/Pt du catalyseur P est de 1.

Le catalyseur Q renferme le même support que le catalyseur A et contient en poids par rapport à ce support:

0,25% poids de platine
0,50% poids de rhénium
0,05% poids d'indium
1,15% poids de chlore

Le rapport pondéral Re/Pt du catalyseur Q est de 2.

Les résultats obtenus pour les divers agencements sont donnés dans le tableau 7 ci-après.

Tableau 6

| Agence-ment | Premier réacteur | | Deuxième réacteur | | Troisième réacteur | |
|---|---|---|---|---|---|---|
| | Catalyseur | % poids* | Catalyseur | % poids* | Catalyseur | % poids* |
| 3 | A | 15% | B | 30% | B | 55% |
| 16 | A | 15% | N | 30% | N | 55% |
| 17 | A | 15% | P | 30% | P | 55% |
| 18 | Q | 15% | B | 30% | B | 55% |
| 19 | Q | 15% | N | 30% | N | 55% |

* % poids de la quantité totale des catalyseurs utilisés dans l'ensemble des trois réacteurs.

## Tableau 7

| Agencement | 3 | 16 | 17 | 18 | 19 |
|---|---|---|---|---|---|
| $H_2$ | 2,98 | 3,07 | 3,06 | 3,02 | 3,05 |
| $CH_4 + C_2H_6$ | 2,09 | 1,93 | 1,94 | 1,99 | 1,99 |
| $C_3H_8 + C_4H_{10}$ | 4,93 | 4,75 | 4,80 | 4,84 | 4,86 |
| $C_5+$ | 90,00 | 90,25 | 90,20 | 90,15 | 90,10 |
| Caractéristiques de la fraction $C_5+$ | | | | | |
| $d_4^{15}$ | 0,800 | 0,805 | 0,804 | 0,802 | 0,803 |
| NOR | 97,5 | 97,9 | 97,8 | 97,6 | 97,7 |
| % poids oléfines | 0,3 | 0,3 | 0,3 | 0,3 | 0,3 |
| % poids naphtènes | 4,0 | 3,6 | 3,7 | 3,8 | 3,9 |
| % poids aromatiques | 67,8 | 68,6 | 68,4 | 68,1 | 68,3 |

## Revendications

1) Procédé de réformage catalytique dans lequel on fait circuler une charge d'hydrocarbures, dans des conditions de réformage en présence d'hydrogène, successivement à travers au moins deux lits fixes de catalyseur renfermant un support, du platine, du rhénium et éventuellement au moins un halogène, le catalyseur du premier ou des premiers lits traversés par la charge étant un catalyseur de type A dont le rapport pondéral (exprimé en élément métal) rhénium/platine est supérieur au rapport pondéral (exprimé en élément métal) rhénium/platine du catalyseur de type B contenu dans le dernier ou les derniers lits traversés par la charge, ledit catalyseur de type B contenant au moins 0,08% en poids de rhénium par rapport au support.

2) Procédé selon la revendication 1 dans lequel le rapport rhénium/platine des catalyseurs de type A est de 1:1 à 5:1 et le rapport pondéral rhénium/platine des catalyseurs de type B est de 0,1:1 à 3:1.

3) Procédé selon la revendication 2 dans lequel le rapport rhénium/platine des catalyseurs de type A est de 1,6:1 à 4:1 et le rapport rhénium/platine des catalyseurs de type B est de 0,5:1 à 1,5:1.

4) Procédé selon l'une des revendications 1 à 3 dans lequel le catalyseur de chaque lit traversé par la charge renferme en poids par rapport au support de 0,05 à 3% de platine et de 0,08 à 3% de rhénium.

5) Procédé selon l'une des revendications 1 à 4 dans lequel le catalyseur de type A renferme en poids par rapport au support de 0,05 à 0,6% de platine et de 0,10 à 3% de rhénium et le catalyseur de type B renferme en poids par rapport au support de 0,05 à 0,6% de platine et de 0,10 à 1% de rhénium.

6) Procédé selon l'une des revendications 1 à 5 dans lequel le catalyseur de chaque lit traversé par la charge renferme de 0,1 à 15% en poids par rapport au support d'au moins un halogène.

7) Procédé selon l'une des revendications 1 à 6 dans lequel le support du catalyseur de chaque lit traversé par la charge comprend principalement de l'alumine.

8) Procédé selon l'une des revendications 1 à 7 dans lequel la proportion pondérale du catalyseur de type B est de 60 à 92% par rapport à la masse catalytique totale.

9) Procédé selon la revendication 8 dans lequel la proportion pondérale du catalyseur de type B est de 80 à 90% par rapport à la masse catalytique totale.

10) Procédé selon l'une des revendications 1 à 9 dans lequel le catalyseur de type A et/ou le catalyseur de type B renferme en outre au moins un métal M choisi dans le groupe formé par l'étain, le germanium, le plomb, l'indium, le thallium et le titane.

11) Procédé selon la revendication 10 dans lequel la quantité de métal M contenu dans le catalyseur de type A et/ou de type B est d'environ 0,01 à 3% en poids par rapport au support.

12) Procédé selon l'une des revendications 1 à 11 dans lequel la charge d'hydrocarbures traverse successivement au moins trois lits de catalyseur, le premier lit catalytique traversé par la charge renfermant un catalyseur de type A dont le rapport pondéral rhénium/platine est supérieur aux rapports pondéraux respectifs rhénium/platine des catalyseurs de type A et/ou B et B contenus dans les autres lits catalytiques.

## Patentansprüche

1. Katalytisches Reformierverfahren, bei dem man eine Kohlenwasserstoffcharge unter Reformierungsbedingungen in Anwesenheit von Wasserstoff nacheinander durch wenigstens zwei feste Katalysatorbetten zirkulieren läßt, die einen Träger, Platin, Rhenium und gegebenenfalls wenigstens ein Halogen aufweisen, wobei der Katalysator des ersten oder der ersten Betten, die von der Charge durchsetzt werden, ein Katalysator vom Typ A ist, dessen Gewichtsverhältnis (ausgedrückt als metallisches Element) von Rhenium/Platin größer als das Gewichtsverhältnis (ausgedrückt als metallisches Element) von Rhenium/Platin des Katalysators vom Typ B ist, der in dem letzten oder den letzten von der Charge durchsetzten Betten enthalten ist, wobei der Katalysator vom Typ B wenigstens 0,08 Gew.-% Rhenium bezogen auf den Träger enthält.

2. Verfahren nach Anspruch 1, dadurch gekennzeichnet, daß das Rhenium/Platin-Verhältnis der Katalysatoren vom Typ A 1:1 bis 5:1 und das Gewichtsverhältnis Rhenium/Platin der Katalysatoren vom Typ B 0,1:1 bis 3:1 beträgt.

3. Verfahren nach Anspruch 2, dadurch gekennzeichnet, daß das Verhältnis Rhenium/Platin der Katalysatoren vom Typ A zwischen 1,6:1 bis 4:1 und das Rhenium/Platin-Verhältnis der Katalysatoren vom Typ B zwischen 0,5:1 bis 1,5:1 beträgt.

4. Verfahren nach einem der Ansprüche 1 bis 3, dadurch gekennzeichnet, daß der Katalysator jedes von der Charge durchsetzten Bettes in Gewichtsprozent, bezogen auf den Träger, zwischen 0,05 bis 3 Gew.-% Platin und 0,08 bis 3 Gew.-% Rhenium enthält.

5. Verfahren nach einem der Ansprüche 1 bis 4, dadurch gekennzeichnet, daß der Katalysator vom Typ A in Gewichtsprozent, bezogen auf den Träger, zwischen 0,05 bis 0,6 Gew.-% Platin und zwischen 0,10 bis 3 Gew.-% Rhenium und der Katalysator vom Typ B, bezogen auf den Träger, zwischen 0,05 bis 0,6 Gew.-% Platin und zwischen 0,10 und 1 Gew.-% Rhenium enthält.

6. Verfahren nach einem der Ansprüche 1 bis 5, dadurch gekennzeichnet, daß der Katalysator jedes von der Charge durchsetzten Bettes zwischen 0,1 bis 15 Gew.-%, bezogen auf den Träger, wenigstens eines Halogens enthält.

7. Verfahren nach einem der Ansprüche 1 bis 6, dadurch gekennzeichnet, daß der Träger des Katalysators jedes von der Charge durchsetzten Bettes im wesentlichen Aluminiumoxid umfaßt.

8. Verfahren nach einem der Ansprüche 1 bis 7, dadurch gekennzeichnet, daß der Gewichtsanteil des Katalysators vom Typ B zwischen 60 und 92%, bezogen auf die katalytische Gesamtmasse, enthält.

9. Verfahren nach Anspruch 8, dadurch gekennzeichnet, daß der Gewichtsanteil des Katalysators vom Typ B zwischen 80 und 90%, bezogen auf die gesamte katalytische Masse, beträgt.

10. Verfahren nach einem der Ansprüche 1 bis 9, dadurch gekennzeichnet, daß der Katalysator vom Typ A und/oder der Katalysator vom Typ B im übrigen wenigstens ein Metall M einschließt, das gewählt ist aus der Gruppe, die gebildet wird durch Zinn, Germanium, Blei, Indium, Thallium und Titan.

11. Verfahren nach Anspruch 10, dadurch gekennzeichnet, daß die im Katalysator vom Typ A und/oder vom Typ B enthaltene Metallmenge M etwa 0,01 bis 3 Gew.-%, bezogen auf den Träger, ausmacht.

12. Verfahren nach einem der Ansprüche 1 bis 11, dadurch gekennzeichnet, daß die Kohlenwasserstoffcharge nacheinander wenigstens drei Katalysatorbetten durchsetzt, wobei das erste von der Charge durchsetzte katalytische Bett einen Katalysator vom Typ A umfaßt, dessen Rhenium/Platin-Gewichtsverhältnis größer als die jeweiligen Rhenium/Platin-Gewichtsverhältnisse der Katalysatoren vom Typ A und/oder B und B ist, die in den anderen katalytischen Betten enthalten sind.

## Claims

1. A catalytic reforming process wherein a hydrocarbon charge circulates, under reforming conditions in the presence of hydrogen, successively through at least two fixed beds of catalyst comprising a carrier, platinum, rhenium and optionally at least one halogen, the catalyst of the one or more first beds wherethrough passes the charge being a catalyst of A type, whose rhenium to platinum ratio by weight (expressed as metal element) is higher than the rhenium/platinum ratio by weight (expressed as metal element) of catalyst B contained in the one or more last beds wherethrough passes the charge, said catalyst of B type containing at least 0.08% by weight of rhenium in proportion to the carrier.

2. A process according to claim 1, wherein the rhenium/platinum ratio of catalysts of A type is from 1:1 to 5:1 and the rhenium/platinum ratio by weight of catalysts of B type is from 0.1:1 to 3:1.

3. A process according to claim 2, wherein the rhenium/platinum ratio of catalysts of A type is from 1.6:1 to 4:1 and the rhenium/platinum ratio of catalysts of B type is from 0.5:1 to 1.5:1.

4. A process according to one of claims 1 to 3, wherein the catalyst of each bed wherethrough passes the charge contains, in proportion by weight to the carrier, from 0.05 to 3% of platinum and from 0.08 to 3% of rhenium.

5. A process according to one of claims 1 to 4, wherein the catalyst of A type contains, in proportion by weight to the carrier, from 0.05 to 0.6% of platinum and from 0.10 to 3% of rhenium and the catalyst of B type contains, in proportion by weight to the carrier, from 0.05 to 0.6% of platinum and from 0.10 to 1% of rhenium.

6. A process according to one of claims 1 to 5, wherein the catalyst of each bed wherethrough passes the charge contains from 0.1 to 15% by weight of at least one halogen, in proportion to the carrier.

7. A process according to one of claims 1 to 6, wherein the catalyst carrier of each bed wherethrough passes the charge, mainly comprises alumina.

8. A process according to one of claims 1 to 7, wherein the proportion by weight of catalyst of B type is from 60 to 92% of the total catalyst mass.

9. A process according to claim 8, wherein the proportion by weight of catalyst of B type is from 80 to 90% of the total catalyst mass.

10. A process according to one of claims 1 to 9, wherein the catalyst of A type and/or the catalyst of B type further contains at least one metal M selected from the group formed of tin, germanium, lead, indium, thallium and titanium.

11. A process according to claim 10, wherein the amount of metal M contained in the catalyst of A type and/or of B type is from about 0.01 to 3% by weight in proportion to the carrier.

12. A process according to one of claims 1 to 11, wherein the hydrocarbon charge passes successively through at least three catalyst beds, the first catalyst bed wherethrough passes the charge containing a catalyst of A type whose rhenium/platinum ratio by weight is higher than the respective rhenium/platinum ratios by weight of the catalysts of A and/or B type and of B type contained in the other catalyst beds.